# EUROPEAN PATENT APPLICATION

(11) **EP 4 398 343 A1**
(43) Date of publication of application: **10.07.2024**
(21) Application number: 22864178.3
(22) Date of filing: 05.08.2022
(51) Int. Cl.: H01M 4/38, C01B 33/32, C07F 7/18, H01M 4/134, H01M 4/36, H01M 4/58

(54) **NEGATIVE ELECTRODE ACTIVE MATERIAL FOR NON-AQUEOUS ELECTROLYTE SECONDARY BATTERY, NON-AQUEOUS ELECTROLYTE SECONDARY BATTERY USING SAME, AND METHOD FOR PRODUCING NEGATIVE ELECTRODE ACTIVE MATERIAL FOR NON-AQUEOUS ELECTROLYTE SECONDARY BATTERY**

(30) Priority: 31.08.2021 JP 2021141746
(71) Applicant: Panasonic Intellectual Property Management Co., Ltd., Kadoma-shi, Osaka 571-0057 (JP)
(72) Inventor: SHIBATA, Sho, Kadoma-shi, Osaka 571-0057 (JP)
(74) Representative: Novagraaf International SA
(86) International application number: PCT/JP2022/030083
(87) International publication number: WO 2023/032592

(57) **Abstract**

The disclosed negative electrode active material for a non-aqueous electrolyte secondary battery includes active material particles containing silicon, and a surface layer formed on surfaces of the active material particles. The surface layer contains a reaction product of a compound reacted so as to form a siloxane bond. The compound includes a structure represented by Si-R1-Si. R1 is a hydrocarbon group having 1 to 50 carbon atoms. The two Si's are each bound with at least one atomic group selected from the group consisting of an alkoxy group having 1 to 6 carbon atoms, and the like.

## Description

### [Technical Field]

The present disclosure relates to a negative electrode active material for a non-aqueous electrolyte secondary battery, a non-aqueous electrolyte secondary battery including the same, and a production method of a negative electrode active material for a non-aqueous electrolyte secondary battery.

### [Background Art]

Silicon materials, such as silicon (Si) and silicon oxides represented by SiOx, are known to be able to absorb a large amount of lithium ions per unit volume as compared to carbon materials, such as graphite, and the application thereof to a negative electrode for a lithium ion battery and other batteries is under consideration. A non-aqueous electrolyte secondary battery in which a silicon material is used as a negative electrode active material, however, suffers from the problem of lower charge-discharge efficiency as compared to when graphite is used as a negative electrode active material. Therefore, in order to improve the charge-discharge efficiency, it has been proposed to use a lithium silicate as a negative electrode active material.

Patent Literature 1 (Japanese Laid-Open Patent Publication No. 2003-160328) discloses "a lithium-containing silicon oxide powder represented by a general formula SiLiₓO_{y} wherein x and y satisfy 0 < x < 1.0 and 0 < y < 1.5, and the lithium is fused and partially crystallized".

Patent Literature 2 (Japanese Laid-Open Patent Publication No. 2014-150068) discloses "a prescribed negative electrode active material for a non-aqueous electrolyte secondary battery obtainable by a method including a step of surface-treating a silicon-containing substance having a surface water content per unit specific surface area (200 to 300°C) of 0.1 to 20 ppm/(m²/g), with a silane coupling agent".

Non-Patent Literature 1 reports that, by adding a vinyl group-containing silane coupling agent to an electrolytic solution of a monopolar battery in which a Si/C composite is used, the capacity retention rate in charge-discharge cycling can be improved.

### [Citation List]

### [Patent Literatures]

Patent Literature 1: Japanese Laid-Open Patent Publication No. 2003-160328
Patent Literature 2: Japanese Laid-Open Patent Publication No. 2014-150068

### [Non-Patent Literature]

Non-Patent Literature 1: Ionics, 2018, 24, 3691-3698

### [Summary of Invention]

### [Technical Problem]

For non-aqueous electrolyte secondary batteries, it has been required to further suppress the decrease in discharge capacity after repeated charge-discharge cycles. Under such circumstances, an object of the present disclosure is to provide a negative electrode active material that can constitute a non-aqueous electrolyte secondary battery having a high capacity retention rate in charge-discharge cycling.

### [Solution to Problem]

An aspect of the present disclosure relates to a negative electrode active material for a non-aqueous electrolyte secondary battery. The negative electrode active material includes: active material particles containing silicon; and a surface layer formed on surfaces of the active material particles, wherein the surface layer contains a reaction product of a compound reacted so as to form a siloxane bond, the compound includes a structure represented by Si-R1-Si, the R1 is a hydrocarbon group having 1 to 50 carbon atoms, one of the two Si's is bound with at least one atomic group selected from the group consisting of an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y1 is an integer of 1 or more and 3 or less, a chloro group, and a hydroxyl group, and the other one of the two Si's is bound with at least one atomic group selected from the group consisting of an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, and a hydroxyl group.

Another aspect of the present disclosure relates to a non-aqueous electrolyte secondary battery. The non-aqueous electrolyte secondary battery includes: a positive electrode; a negative electrode; and a non-aqueous electrolyte, wherein the negative electrode includes the negative electrode active material according to the present disclosure.

Another aspect of the present disclosure relates to a production method of a negative electrode active material for a non-aqueous electrolyte secondary battery. The production method includes: a first step of bringing a compound or a liquid in which the compound is dissolved, into contact with active material particles containing silicon; and a second step of reacting the compound so as to form a siloxane bond, while the compound or the liquid is in contact with the active material particles, wherein the compound includes a structure represented by Si-R1-Si, the R1 is a hydrocarbon group having 1 to 50 carbon atoms, one of the two Si's is bound with at least one atomic group selected from the group consisting of an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y1 is an integer of 1 or more and 3 or less, a chloro group, and a hydroxyl group, and the other one of the two Si's is bound with at least one atomic group selected from the group consisting of an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, and a hydroxyl group.

### [Advantageous Effects of Invention]

According to the present disclosure, it is possible to obtain a negative electrode active material that can constitute a non-aqueous electrolyte secondary battery having a high capacity retention rate in charge-discharge cycling. Furthermore, according to the present disclosure, it is possible to obtain a non-aqueous electrolyte secondary battery including the aforementioned negative electrode active material.

While the novel features of the invention are set forth in the appended claims, the invention, both as to organization and content, will be better understood and appreciated, along with other objects and features thereof, from the following detailed description taken in conjunction with the drawings.

### [Brief Description of Drawings]

[FIG. 1] A partially cut-away plan view schematically showing a structure of a non-aqueous electrolyte secondary battery according to an embodiment of the present invention.
[FIG. 2] A cross-sectional view of the non-aqueous secondary battery shown in FIG. 1, taken along the line X-X'.

### [Description of Embodiments]

In the following, embodiments according to the present disclosure will be described by way of examples. However, the embodiments according to the present disclosure are not limited to the examples described below. In the present specification, the expression "from a numerical value A to a numerical value B" includes the numerical value A and the numerical value B, and can be read as "a numerical value A or more and a numerical value B or less". In the case where lower limits and upper limits are given as examples for numerical values relating to specific physical properties or conditions in the following description, any of the given lower limits and any of the given upper limits can be freely combined unless the lower limit is greater than or equal to the upper limit.

### (Negative electrode active material for non-aqueous electrolyte secondary battery)

A negative electrode active material for a non-aqueous electrolyte secondary battery according to the present disclosure includes active material particles containing silicon, and a surface layer formed on surfaces of the active material particles. The electrode active material and the surface layer may be hereinafter referred to as a "negative electrode active material (N)" and a "surface layer (L)". The surface layer (L) contains a reaction product of a predetermined compound reacted so as to form a siloxane bond. The compound may be hereinafter referred to as a "compound (1)". The compound (1) includes a structure represented by Si-R1-Si. R1 is a hydrocarbon group having 1 to 50 carbon atoms. One of the two Si's is bound with at least one atomic group selected from the group consisting of an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y1 is an integer of 1 or more and 3 or less, a chloro group, and a hydroxyl group. The other one of the two Si's is bound with at least one atomic group selected from the group consisting of an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, and a hydroxyl group.

The oxyalkylene group is a group represented by -O-CₓH₂ₓ-. In the group including an oxyalkylene group and represented by -O-(Cₓ₁H₂ₓ₁₊₁O_{y1}), and in the group including an oxyalkylene group and represented by -O-(Cₓ₂H₂ₓ₂₊₁O_{y2}), the oxygen atom of the oxyalkylene group is bound to Si. In the following, the group including an oxyalkylene group containing an oxygen atom bound to Si and represented by -O-(CₓH₂ₓ₊₁O_{y}) where x is an integer of 2 or more and 6 or less, and y is an integer of 1 or more and 3 or less may be referred to as an "oxyalkyl group". In all the oxyalkyl groups bound to Si of the compound (1), y (e.g., y1, y2, and y6 described below) may be 1 or 2. Examples of the oxyalkyl group include a group represented by -OCₓ₄H₂ₓ₄-OCₓ₅H₂ₓ₅₊₁ where x4 is an integer of 1 or more and 3 or less, x5 is an integer of 1 or more and 3 or less, and specific examples thereof include -OCH₂CH₂OCH₃ etc.

The compound (1) may be a compound represented by the following formula (1).

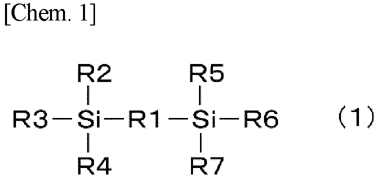

In the formula (1), at least one selected from the group consisting of R2, R3, and R4 is each independently an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y1 is an integer of 1 or more and 3 or less, a chloro group, or a hydroxyl group. At least one selected from the group consisting of R5, R6, and R7 is each independently an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, or a hydroxyl group. The rest of R2 to R7 may be each independently a hydrocarbon group having 1 to 6 carbon atoms, a hydrogen atom, or a group represented by Cₓ₃H_{2x3+y3+1}N_{y3}O_{z3}S_{w3} where x3 is an integer of 1 or more and 6 or less, y3 is an integer of 0 or more and 3 or less, z3 is an integer of 0 or more and 3 or less, w3 is an integer of 0 or more and 3 or less, and 1≤y3 + z3 + w3. R2 to R7 may be the same or different.

Examples of the hydrocarbon group contained in R2 to R7 include a hydrocarbon group having 1 to 6 carbon atoms, and specific examples thereof include alkyl, alkenyl, and alkynyl groups having 1 to 6 carbon atoms. The group represented by Cₓ₃H_{2x3+y3+1}N_{y3}O_{z3}S_{w3} is neither an alkoxy group having 1 to 6 carbon atoms, nor the above-described group represented by -O-(Cₓ₁H₂ₓ₁₊₁O_{y1}). y3, Z3, and w3 may be each independently an integer of 0 to 2 or an integer of 0 to 1. The sum of y3, z3, and w3 may be in the range of 1 to 3 or in the range of 1 to 2. The sum of y3, z3, and w3 may be 1 or 2, and is, for example, 1. Examples of the group represented by Cₓ₃H_{2x3+y3+1}N_{y3}O_{z3}S_{w3} include a group represented by Cₓ₃H₂ₓ₃₊₁O_{y3}, an alkylamino group having 1 to 6 carbon atoms, a mercaptoalkyl group having 1 to 6 carbon atoms, etc. The group represented by Cₓ₃H₂ₓ₃₊₁O_{y3} is bound to Si via, for example, a carbon atom. Examples of the group represented by Cₓ₃H₂ₓ₃₊₁O_{y3} include a hydroxyalkyl group. The rest of R2 to R7 may be each independently a hydrocarbon group having 1 to 6 carbon atoms, or a hydrogen atom.

In the compound (1), the alkoxy group having 1 to 6 carbon atoms and the above-described oxyalkylene group may be collectively read as "the group including an alkoxy group bound to Si or an oxyalkylene group bound to Si and represented by -O-(Cₓ₆H₂ₓ₆₊₁O_{y6}) where x6 is an integer of 2 or more and 6 or less, and y6 is an integer of 0 or more and 3 or less". Alternatively, the alkoxy group having 1 to 6 carbon atoms and the above-described oxyalkylene group may be collectively read as "the group including an alkoxy group and having 1 to 6 carbon atoms".

In a different point of view, the surface layer formed on the surfaces of the active material particles contains a reaction product of a compound (0) reacted so as to form a siloxane bond. The compound (0) is a compound containing two silicon atoms bound with an atomic group capable of forming a siloxane bond through reaction, and R1 joining the two silicon atoms. The number of the atomic groups bound to one silicon atom is in the range of 1 to 3, preferably 2, and more preferably 3. Examples of the atomic group capable of forming a siloxane bond through reaction include an alkoxy group, a hydroxyl group, a chloro groups, and the above-described oxyalkyl group, etc. In the following, an alkoxy group having 1 to 6 carbon atoms, a hydroxyl group, a chloro group and the above-described oxyalkyl group may be collectively referred to as an "atomic group (G)". The reaction (e.g., hydrolysis-condensation reaction) to form a siloxane bond by reacting a compound having an alkoxysilyl group is widely known. For the R1 in the compound (0), the R1 exemplified for the compound (1) can be adopted. Examples of the compound (0) include at least some of the examples of the compound (1).

For the compound (0) and the compound (1), commercially available compounds may be used. Also, compounds for which synthesis methods are known may be synthesized by such synthesis methods.

In the negative electrode active material (N) according to the present disclosure, the surfaces of the active material particles are protected with the reaction product of the compound (1). At least part of the compound (1) forms a siloxane bond with silicon contained in the active material particles. In the compound (1), silyl groups forming a siloxane bond are linked via R1. Therefore, as a result of the two silyl groups forming a siloxane bond with the silicon in the active material particles, the surfaces of the active material particles are protected. Since the reaction product of the compound (1) contains the portion of R1, the reaction product can flexibly follow the expansion and contraction of the active material particles associated with charge and discharge, and thus the surface protection layer is resistant to breaking even when the active material particles repeatedly expand and contract due to charge-discharge cycling. Therefore, according to the present disclosure, the side reactions with the components in the electrolytic solution on the surfaces of the active material particles can be suppressed. As a result, according to the present disclosure, it is possible to increase the capacity retention rate in charge-discharge cycling.

Among R2 to R7, the ones other than the above-described atomic groups (G) may be each independently the aforementioned group. Specifically, among R2 to R7, the ones other than the above-described atomic groups (G) may be each independently a hydrocarbon group having 1 to 6 carbon atoms, a hydrogen atom, or a group represented by the above formula Cₓ₃H_{2x3+y3+1}N_{y3}O_{z3}S_{w3}.

The formula (1) preferably satisfies the following condition (V1) or (V2), and more preferably may satisfy the following condition (V3) or (V4). The formula (1) may satisfy the following condition (V5) or (V6).
(V1) The number of carbon atoms contained in each of R2 to R7 is 4 or less.
(V2) At least two selected from the group consisting of R2, R3, and R4 are an alkoxy group having 1 to 4 carbon atoms, and at least two selected from the group consisting of R5, R6, and R7 is an alkoxy group having 1 to 4 carbon atoms. Among R2 to R7, the ones other than the alkoxy group having 1 to 4 carbon atoms are a hydrocarbon group (alkyl, alkenyl, or alkynyl group) having 1 to 6 carbon atoms, or a hydrogen atom.
(V3) All of R2 to R7 are an alkoxy group having 1 to 4 carbon atoms (e.g., 1 to 3 carbon atoms).
(V4) All of R2 to R7 are each independently a methoxy group or an ethoxy group. R2 to R7 may be a methoxy group or an ethoxy group. For example, all of R2 to R7 may be a methoxy group, or all of R2 to R7 may be an ethoxy group
(V5) Conditions corresponding to the condition (V2), with all the phrases of "having 1 to 4 carbon atoms" replaced with "having 1 to 3 carbon atoms", are satisfied.
(V6) Conditions corresponding to the condition (V2), with all the phrases of "having 1 to 4 carbon atoms" replaced with "having 1 or 2 carbon atoms", are satisfied.

The number of carbon atoms in R1 is 1 or more, and may be 2 or more, 3 or more, 4 or more, or 6 or more. The carbon atoms in R1 is 50 or less, and maybe 30 or less, 20 or less, 10 or less, 8 or less, or 6 or less. For example, the number of carbon atoms in R1 may be 1 to 30, 1 to 20, 1 to 10, or 1 to 6. With regard to these ranges, the lower limit may be 2 or more, 3 or more, 4 or more, or 6 or more unless the lower limit is greater than or equal to the upper limit.

The two Si's of the compound (1) may be joined by a carbon chain having 1 to 20 carbon atoms. That is, the compound (1) may include a chain structure represented by Si(-C)ₙ-Si, and n may be 1 to 20. The number n of carbon atoms of the carbon chain is 1 or more, and may be 2 or more, 3 or more, or 4 or more. The aforementioned number of carbon atoms is 20 or less, and may be 10 or less, 8 or less, or 6 or less. The number n of carbon atoms may be 1 to 20, 1 to 10, 1 to 8, or 1 to 6. With regard to these ranges, the lower limit may be 2 or more, 3 or more, or 6 or more unless the lower limit is greater than or equal to the upper limit.

R1 may be a saturated hydrocarbon group, or may be an unsaturated hydrocarbon group. When R1 is an unsaturated hydrocarbon group, R1 may include a vinylene group (-CH=CH-), an ethynylene group (-C≡C-), a phenylene group (-C₆H₄-), or the like. R1 may include at least one selected from the group consisting of a vinylene group, an ethynylene group, and a phenylene group, or may be these groups. R1 may include at least one selected from the group consisting of a vinylene group, an ethynylene group, and a phenylene group, and an alkylene group, or may be composed only of the at least one group and an alkylene group.

R1 may be an alkylene group in which branched chains may be bound, or may be a linear alkylene group. The number of carbon atoms of these alkylene groups may be in the range exemplified for the number n of carbon atoms of the carbon chain. For example, the linear alkylene group may be represented by -(CH₂)ₙ- where n is the above-described number n of carbon atoms).

By using the compound (1), a coating constituted by a reaction product can be formed on surfaces of the active material particles. This coating may be hereinafter referred to as an "SRS coating". The greater the number of carbon atoms of the carbon chain joining the two Si's, the more excellent the flexibility is, which facilitates the reversible deformation of the SRS coating. However, it is considered that when the number of carbon atoms is excessively increased, the length of the carbon chain is excessively increased to reduce the denseness of the SRS coating, resulting in a reduction in the effect of suppressing side reactions. Therefore, the aforementioned number n of carbon atoms is preferably 1 to 6, and more preferably 2 to 4. A preferred example of the compound (1) is bis(alkoxysilyl)alkane. A preferred example of the bis(alkoxysilyl)alkane is bis(alkoxysilyl) C₁₋₆ alkane, and bis(alkoxysilyl) C₂₋₄ alkane may be used.

The SRS coating formed when using bis(alkoxysilyl)alkane is composed of a stable siloxane structure and an alkylene group. Such an SRS coating is not only easily elastically deformable, but also chemically and structurally stable.

Among bis(alkoxysilyl)alkanes, those that are easily available include at least one selected from the group consisting of 1,2-bis(trialkoxysilyl)ethane and 1,6-bis(trialkoxysilyl)hexane. Examples of 1,2-bis(trialkoxysilyl)ethane include 1,2-bis(trimethoxysilyl)ethane, 1,2-bis(triethoxysilyl)ethane, etc. Examples of 1,6-bis(trialkoxysilyl)hexane include 1,6-bis(trimethoxysilyl)hexane, 1,6-bis(triethoxysilyl)hexane, etc.

The greater the number of the atomic groups (G) (e.g., alkoxy groups) contained the compound (1) (e.g., the compound represented by the formula (1)), the more likely a three-dimensional network resulted from the reaction between the compounds (1) is to be formed. Part of this network is bound to the silicon present on the surfaces of the negative electrode active material particles. Even when the three-dimensional network is formed, due to the presence of the portion of R1 in the network, the formed network is considered to have high flexibility. The formation of a highly flexible three-dimensional network is considered to provide a higher effect.

The mass of the reaction product in the compound (1) contained in the surface layer may be in the range of 0.001% to 10% (e.g., in the range of 0.05% to 1%) of the mass of the active material particles. This percentage may be analyzed by ICP spectroscopy and the like.

The reaction product may have a chemical structure in which Si in the structure of SiR1-Si is bound to Si (silicon) in the active material particles via a siloxane bond. That is, the surface layer (L) may include a chemical structure (a reaction product of the compound (1)) in which Si in a plurality of Si-R1-Si structures are bound to Si in the active material particles, via a siloxane bond. The reaction product may have a structure in which Si in a plurality of Si-R1-Si structures are bound to each other and to Si in the active material particles, via a siloxane bond. That is, the surface layer (L) may have a chemical structure (a reaction product of the compound (1)) in which Si in a plurality of Si-R1-Si structures are bound to each other and to Si in the active material particles, via a siloxane bond.

The atomic groups (G) contained in R2 to R4 and R5 to R7 can form an X-O-Si-R1 bond with the surface of a silicon element-containing material, and the surface of the silicon element-containing material may possibly be covered with a Si-R1-Si structure with stable siloxane bonds on both ends. That is, the surface of the silicon element-containing material may possibly be covered with a coating containing a Si-R1-Si structure.

The surface layer (L) of the negative electrode active material (N) may contain a conductive carbon. In this case, the formula (1) preferably satisfies the above condition (V2) or (V5). A silicon-containing active material, due to its poor electrical conductivity, tends to cause a capacity decrease in charge-discharge cycling. By arranging a conductive carbon on the active material surface, the capacity decrease in charge-discharge cycling can be suppressed. However, by merely arranging a conductive carbon on the surface, the adhesion between the active material and the conductive carbon is reduced due to expansion and contraction of the active material associated with charge-discharge cycles, and the conductivity therebetween is reduced. On the other hand, when the surface layer (L) contains a reaction product of the compound (1) and a conductive carbon, the charge-discharge efficiency of the silicon-containing negative electrode active material can be significantly improved. This is possibly because the adhesion between the active material and the conductive carbon is maintained by the network formed by the reaction product of the compound (1).

As the conductive carbon, for example, amorphous carbon, graphite, graphitizable carbon (soft carbon), non-graphitizable carbon (hard carbon), and the like can be used. Among them, amorphous carbon is preferable in that a thin conductive layer covering the surfaces of the composite particles can be easily formed. Examples of the amorphous carbon includes carbon black, calcined pitch, coke, activated carbon, etc. Examples of the graphite includes natural graphite, artificial graphite, graphitized mesophase carbon, etc.

Even when the surface layer (L) contains a conductive carbon, the compound (1) is considered to permeate into the gaps between the conductive carbon particles, and to be bound to Si in the negative electrode active material particles.

### (Active material particles)

The active material particles contain silicon (silicon element). A material containing silicon is sometimes treated as a kind of alloy-based material. Here, the alloy-based material refers to a material containing an element capable of forming an alloy with lithium. Examples of the element capable of forming an alloy with lithium include silicon, tin, etc., among which silicon (Si) is promising. The method of producing the active material particles is not limited. The active material particles may be produced by a known method, or commercially available active material particles may be used.

The material containing silicon may be a silicon alloy, a silicon compound, and the like, and may be a composite material. In particular, a composite material including a lithium ion conductive phase and silicon particles dispersed in the lithium ion conductive phase is promising. As the lithium ion conductive phase, for example, a silicon oxide phase, a silicate phase, a carbon phase, and the like can be used. The silicon oxide phase is a material having relatively high irreversible capacity. On the other hand, the silicate phase is preferable because of its low irreversible capacity.

The main component (e.g., 95 to 100 mass%) of the silicon oxide phase may be silicon dioxide. The composition of a composite material including a silicon oxide phase and silicon particles dispersed therein can be expressed, as a whole, by SiOₓ. The SiOx has a structure in which fine silicon particles are dispersed in amorphous SiO₂. The content x of oxygen relative to silicon is, for example, 0.5 ≤ x < 2.0, more preferably 0.8 ≤ x ≤ 1.5.

The silicate phase may contain, for example, at least one selected from the group consisting of Group I and II elements in the long-form periodic table. Examples of the Group I and II elements in the long-form periodic table that can be used include lithium (Li), potassium (K), sodium (Na), magnesium (Mg), calcium (Ca), strontium (Sr), and barium (Ba). Other elements, such as aluminum (Al), boron (B), lanthanum (La), phosphorus (P), zirconium (Zr), and titanium (Ti), may be contained. In particular, a silicate phase containing lithium (hereinafter may also be referred to as a lithium silicate phase) is preferable because of its low irreversible capacity and high initial charge-discharge efficiency.

The lithium silicate phase may be an oxide phase containing lithium (Li), silicon (Si), and oxygen (O), and may contain other elements. The atomic ratio O/Si of O to Si in the lithium silicate phase is, for example, greater than 2 and less than 4. Preferably, the O/Si is greater than 2 and less than 3. The atomic ratio Li/Si of Li to Si in the lithium silicate phase is, for example, greater than 0 and less than 4. The lithium silicate phase can have a composition represented by a formula: Li_{2z}SiO_{2+z} where 0 < z < 2. The symbol z preferably satisfies 0 < z < 1, and more preferably z = 1/2. Examples of the elements other than Li, Si and O that can be contained in the lithium silicate phase include iron (Fe), chromium (Cr), nickel (Ni), manganese (Mn), copper (Cu), molybdenum (Mo), zinc (Zn), and aluminum (Al).

The carbon phase can be composed of, for example, shapeless carbon with low crystallinity (i.e., amorphous carbon). The shapeless carbon may be, for example, hard carbon, soft carbon, or others.

Each of the active material particles (N) and the negative electrode mixture layer may contain, in addition to the silicon element-containing material, a material that electrochemically absorbs and desorbs lithium ions, lithium metal, a lithium alloy, and the like. As the material that electrochemically absorbs and desorbs lithium ions, a carbon material is preferred. Examples of the carbon material include graphite, graphitizable carbon (soft carbon), non-graphitizable carbon (hard carbon), etc. Preferred among them is graphite that is excellent in stability during charge and discharge and has low irreversible capacity.

The active material particles may be composite particles containing a lithium silicate phase represented LiₓSiO_{y} where 0 < x ≤ 4 and 0 < y ≤ 4, and a silicon phase dispersed in the lithium silicate phase. Note that x and y are irrelevant to the x and y related to the compound (1). Such composite particles may be produced by, for example, a method described later in Examples, or may be produced by a known method. The crystallite size of the silicon phase may be in the range of 1 nm to 1000 nm (e.g., in the range of 200 nm to 500 nm).

The crystallite size of the silicon phase is calculated using the Scherrer formula from the half width of a diffraction peak attributed to the (111) plane of the silicon phase (elementary Si) in an X-ray diffraction pattern.

The active material particles may be composite particles containing a carbon phase and a silicon phase dispersed in the carbon phase. The carbon phase can be constituted of, for example, shapeless carbon (i.e., amorphous carbon). The shapeless carbon may be, for example, hard carbon, soft carbon, or others. The shapeless carbon (amorphous carbon), in general, refers to a carbon material having an average interplanar spacing d002 of the (002) plane of exceeding 0.34 nm, as measured by an X-ray diffractometry.

### (Production method of negative electrode active material (N))

The production method according to the present disclosure is a method for producing a negative electrode active material (N) for a non-aqueous electrolyte secondary battery according to the present disclosure. The negative electrode active material (N) may be produced by a method other than the method described below. Since the matters described about the negative electrode active material (N) can be applied to the production method below, redundant description may be omitted in some cases. The matters described below about the production method may be applied to the negative electrode active material according to the present disclosure.

The production method includes a first step and a second step in this order. The first and second steps are performed under the conditions that the compound (1) forms a siloxane bond. The first and second steps may be performed under the conditions similar to those under which a known silane coupling agent containing an alkoxysilyl group is hydrolyzed and condensed so as to form a siloxane bond.

### (First step)

The first step is a step of bringing the compound (1) or a liquid in which the compound (1) is dissolved, into contact with active material particles containing silicon. The liquid may be hereinafter referred to as a "liquid (S)". The first step may be a step of dispersing silicon-containing active material particles in the compound (1) or the liquid (S). Alternatively, the first step may be a step of applying the compound (1) or the liquid (S) onto the surfaces of the silicon-containing active material particles.

The compound (1) is the above-described compound, and a compound represented by the formula (1) can be used. The active material particles are the above-described active material particles. The liquid (S) can be prepared by dissolving the compound (1) in a solvent. Here, before the second step is performed, part of the compound (1) may have been reacted so as to form a siloxane bond. The solvent may include a lower alcohol (e.g., ethanol), water, and an acid. Examples of the acid include hydrochloric acid and the like.

The content of the reaction product of the compound (1) in the negative electrode active material (N) can be changed by changing the concentration of the compound (1) in the liquid (S). The concentration of the compound (1) in the liquid (S) may be in the range of 0.0001 to 10 mol/liter (e.g., in the range of 0.001 to 0.1 mol/liter). The mass of the compound (1) per 1 g mass of the active material particles dispersed in the liquid (S) may be in the range of 0.0001 to 1 g (e.g., in the range of 0.001 to 0.1 g).

### (Second step)

The second step is a step of reacting the compound (1) so as to form a siloxane bond while the compound (1) or the liquid (S) is in contact with the active material particles. The second step may be performed by, for example, holding the liquid (S) and the active material particles at a temperature elevated to a predetermined temperature, for a predetermined time. When the active material particles are dispersed in the liquid (S), the liquid (S) may be stirred in the second step. The predetermined temperature may be in the range of 10 to 200°C (e.g., in the range of 40 to 100°C). The predetermined time may be in the range of 1 to 120 hours (e.g., in the range of 12 to 72 hours).

A negative electrode active material (N) is obtained in the second step. The negative electrode active material (N) obtained in the second step may be washed and/or dried, as necessary.

The production method according to the present disclosure may include a step (a) of placing a conductive carbon on the surfaces of the active material particles before the first step, or between the first step and the second step, or after the second step. By performing the step (a), a surface layer (L) containing a reaction product of the compound (1) and a conductive carbon can be formed.

The step (a) may be performed by heat-treating a mixture of the active material particles and the conductive carbon. As the raw material of the conductive carbon, for example, coal or coal tar pitch, petroleum pitch, phenol resin, and the like can be used. The heat treatment may be performed by, for example, heating at a temperature of 450 to 1000°C for 1 to 10 hours. As the conductive carbon, the aforementioned conductive carbon can be used. Alternatively, in the step (a), using a gas phase method such as a CVD method, a conductive carbon layer may be formed by reacting a hydrocarbon gas on the surfaces of the composite particles. As the hydrocarbon gas, acetylene, methane, and the like can be used. With these methods, it is possible to form a conductive layer into which the reaction product of the compound (1) can be infiltrated.

### (Negative electrode for non-aqueous electrolyte secondary battery)

The present disclosure provides a negative electrode for non-aqueous electrolyte secondary batteries. The negative electrode includes the negative electrode active material (N) according to the present disclosure.

The negative electrode mixture layer of the negative electrode contains the negative electrode active material (N) according to the present disclosure. In a preferred example, a reaction product of the compound (1) is present throughout the negative electrode mixture layer. In other words, the reaction product of the compound (1) is present on the surface of each of the negative electrode active material particles rather than being formed in the form of a layer on the surface of the negative electrode mixture layer.

### (Non-aqueous electrolyte secondary battery)

A non-aqueous electrolyte secondary battery according to the present disclosure includes a positive electrode, a negative electrode, and a non-aqueous electrolyte. The negative electrode includes the negative electrode active material (N). There is no particular limitation on the configuration other than that of the negative electrode, and a known configuration used for non-aqueous electrolyte secondary batteries may be adopted. Except for containing the negative electrode active material (N), the configuration of the negative electrode is not particularly limited. For the components of the negative electrode other than the negative electrode active material (N), known components of the negative electrode for non-aqueous electrolyte secondary batteries may be adopted. An example of a negative electrode according to the present disclosure includes a negative electrode current collector and a negative electrode mixture layer disposed on a surface of the negative electrode current collector. Except for using the negative electrode active material (N), the method for producing the non-aqueous electrolyte secondary battery according to the present disclosure is not limited, and a known production method may be adopted.

An example of the configuration of the non-aqueous electrolyte secondary battery according to the present disclosure will be described below. It is to be noted, however, that except for using the negative electrode active material (N), the configuration of the non-aqueous electrolyte secondary battery is not limited to the following configuration.

### (Negative electrode)

The negative electrode includes, for example, a negative electrode current collector and a negative electrode mixture layer formed on a surface of the negative electrode current collector. The negative electrode mixture layer contains a negative electrode active material (N) as an essential component, and may contain optional components, such as a binder, a conductive material, and a thickener. The negative electrode mixture layer may contain, in addition to the negative electrode active material (N), an active material for a negative electrode other than the negative electrode active material (N). For the optional components, such as the binder, the conductive material, and the thickener, known materials can be used.

The negative electrode mixture layer can be formed by, for example, applying a negative electrode slurry in which a negative electrode mixture containing a negative electrode active material (N) and a predetermined optional component is dispersed in a dispersion medium, onto a surface of the negative electrode current collector, and drying the slurry. The dried coating film may be rolled, as necessary. The negative electrode mixture layer may be formed on one surface or both surfaces of the negative electrode current collector.

For the negative electrode current collector, for example, a metal sheet or metal foil is used. Examples of the material of the negative electrode current collector include stainless steel, nickel, a nickel alloy, copper, a copper alloy, etc.

### (Positive electrode)

The positive electrode includes, for example, a positive electrode current collector and a positive electrode mixture layer formed on a surface of the positive electrode current collector. The positive electrode mixture layer contains a positive electrode active material as an essential component, and may contain optional components, such as a binder, a conductive material, and a thickener. For the optional components, such as the binder, the conductive material, and the thickener, known materials can be used.

The positive electrode mixture layer can be formed by, for example, applying a positive electrode slurry in which a positive electrode mixture containing a positive electrode active material and a predetermined optional component is dispersed in a dispersion medium, onto a surface of the positive electrode current collector, and drying the slurry. The dried coating film may be rolled, as necessary. The positive electrode mixture layer may be formed on one surface or both surfaces of the positive electrode current collector.

As the positive electrode active material, for example, a lithium-containing composite oxide can be used. Examples thereof include LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. Note that the value a, which indicates the molar ratio of lithium, increases or decreases during charging and discharging.

Preferred among them is a lithium-nickel composite oxide represented by LiₐNi_{b}Me_{1-b}O₂ where Me is at least one selected from the group consisting of Mn, Co, and Al, and 0 < a ≤ 1.2, and 0.3 ≤ b ≤ 1. From the viewpoint of increasing the capacity, 0.85 ≤ b < 1 is more preferred. In terms of the stability of the crystal structure, more preferred is LiₐNi_{b}Co_{c}Al_{d}O₂ containing Co and Al as elements represented by Me where 0 < a ≤ 1.2, 0.85 ≤ b < 1, 0 < c < 0.15, and 0 < d ≤ 0.1, b + c + d =1.

The positive electrode active material (especially, a lithium-containing composite oxide) usually has a form of secondary particles in which primary particles are aggregated together. The average particle diameter of the positive electrode active material may be, for example, 2 µm or more and 20 µm or less. Here, the average particle diameter refers to a median diameter at 50% cumulative volume in a volume-based particle size distribution. The volume-based particle size distribution can be measured with a laser diffraction particle size distribution measurement apparatus.

For the positive electrode current collector, for example, a metal sheet or metal foil is used. Examples of the material of the positive electrode current collector include stainless steel, aluminum, an aluminum alloy, titanium, etc.

Examples of the conductive materials used in the positive electrode mixture layer and the negative electrode mixture layer include carbon materials, such as carbon black (CB), acetylene black (AB), Ketjen black (KB), carbon nanotubes (CNT), and graphite. These may be used singly or in combination of two or more thereof.

Examples of the binders used in the positive electrode mixture layer and the negative electrode mixture layer include fluorocarbon resins (polytetrafluoroethylene, polyvinylidene fluoride, etc.), polyacrylonitrile (PAN), polyimide resins, acrylic resins, polyolefin resins, etc. These may be used singly or in combination of two or more thereof.

### (Separator)

Anon-aqueous electrolyte secondary battery usually includes a separator disposed between the positive electrode and the negative electrode. The separator has high ion permeability, as well as moderate mechanical strength and electrically insulating properties. As the separator, a microporous film, a woven fabric, a non-woven fabric, and the like can be used. Examples of the material of the separator include polyolefins (polypropylene, polyethylene, etc.).

### (Non-aqueous electrolyte)

A non-aqueous electrolyte (in other words, a non-aqueous electrolytic solution) contains a non-aqueous solvent and a salt (solute) dissolved in the non-aqueous solvent. The salt (solute) is an electrolyte salt that ionically dissociates in the non-aqueous solvent. When the non-aqueous electrolyte is used in a lithium-ion secondary battery, the salt contains at least a lithium salt. The non-aqueous electrolyte may contain an additive other than the non-aqueous solvent and the salt. For example, the non-aqueous electrolyte may contain the compound (1) and/or a reaction product of the compound (1).

As the non-aqueous solvent, for example, a cyclic carbonic acid ester, a chain carbonic acid ester, a cyclic carboxylic acid ester, a chain carboxylic acid ester, and the like can be used. Examples of the cyclic carbonic acid ester include propylene carbonate (PC), ethylene carbonate (EC), vinylene carbonate (VC), etc. Examples of the chain carbonic acid ester include diethyl carbonate (DEC), ethyl methyl carbonate (EMC), dimethyl carbonate (DMC), etc. Examples of the cyclic carboxylic acid ester include γ-butyrolactone (GBL), γ-valerolactone (GVL), etc. Examples of the chain carboxylic acid ester include methyl acetate, ethyl acetate, propyl acetate, methyl propionate (MP), ethyl propionate (EP), etc. The non-aqueous solvents may be used singly or in combination of two or more thereof.

In particular, chain carboxylic acid esters are suited for preparing a non-aqueous electrolytic solution with low viscosity. Therefore, the non-aqueous electrolytic solution may contain 1% by mass or more and 90% by mass or less of a chain carboxylic acid ester. Among chain carboxylic acid esters, methyl acetate has a particularly low viscosity. Therefore, 90% by mass or more of the chain carboxylic acid ester may be methyl acetate.

Other examples of the non-aqueous solvent include cyclic ethers, chain ethers, nitriles such as acetonitrile, amides such as dimethylformamide, etc.

Examples of the cyclic ether include 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, crown ether, etc.

Examples of the chain ether include 1,2-dimethoxyethane, dimethyl ether, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, tetraethylene glycol dimethyl ether, etc.

These solvents may be a fluorinated solvent in which one or more hydrogen atoms are substituted by fluorine atom(s). As the fluorinated solvent, fluoroethylene carbonate (FEC) may be used.

As the lithium salt, for example, a lithium salt of a chlorine-containing acid (LiClO₄, LiAlCl₄, LiB₁₀Cl₁₀, etc.), a lithium salt of a fluorine-containing acid (LiPF₆, LiPF₂O₂, LiBF₄, LiSbF₆, LiAsF₆, LiCF₃SO₃, LiCF₃CO₂, etc.), a lithium salt of a fluorine-containing acid imide (LiN(FSO₂)₂, LiN(CF₃SO₂)₂, LiN(CF₃SO₂)(C₄F₉SO₂), LiN(C₂F₅SO₂)₂, etc.), a lithium halide (LiCl, LiBr, LiI, etc.), and the like may be used. The lithium salts may be used singly or in combination of two or more thereof.

The concentration of the lithium salt in the non-aqueous electrolytic solution may be 0.5 mol/liter or more and 2 mol/liter or less, and may be 1 mol/liter or more and 1.5 mol/liter or less. When the concentration of the lithium salt is controlled within the above range, an electrolytic solution having excellent ionic conductivity and moderate viscosity can be obtained.

Examples of the additive include 1,3-propanesultone, methylbenzene sulfonate, cyclohexylbenzene, biphenyl, diphenyl ether, fluorobenzene, etc.

An example of the non-aqueous electrolyte secondary battery includes an outer body, and an electrode group and a non-aqueous electrolyte housed in the outer body. The electrode group may be a wound electrode group formed by winding a positive electrode and a negative electrode, with a separator interposed therebetween. The wound electrode group may be replaced by an electrode group in another form. For example, the electrode group may be a stacked electrode group formed by stacking a positive electrode and a negative electrode, with a separator interposed therebetween. The non-aqueous electrolyte secondary battery may be of any type, such as cylindrical, prismatic, coin, button, and sheet (laminate) types.

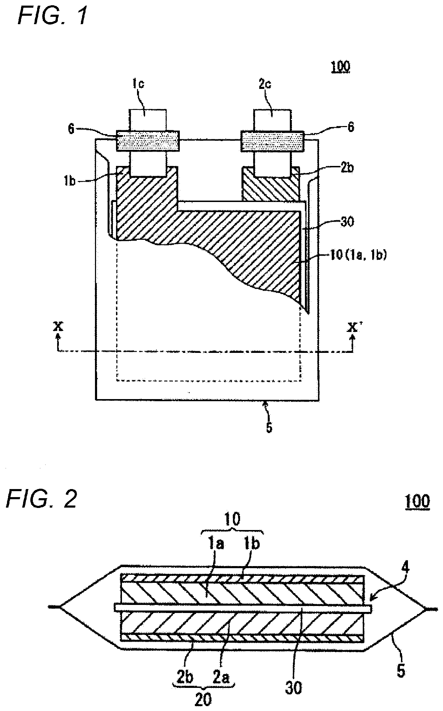

In the following, a non-aqueous electrolyte secondary battery according to an embodiment of the present invention will be described with reference to FIGS. 1 and 2. FIG. 1 is a partially cut-away plan view schematically showing an example of the structure of the non-aqueous electrolyte secondary battery. FIG. 2 is a cross-sectional view taken along the line X-X' in FIG 1.

As shown in FIGS. 1 and 2, a non-aqueous electrolyte secondary battery 100 is a sheet-type battery, and includes an electrode plate group 4 and an outer case 5 housing the electrode plate group 4.

The electrode plate group 4 has a structure in which a positive electrode 10, a separator 30 and a negative electrode 20 are stacked in this order. The positive electrode 10 and the negative electrode 20 are opposed to each other, with the separator 30 interposed therebetween. Thus, the electrode plate group 4 is formed. The electrode group 4 is impregnated with non-aqueous electrolyte (not shown).

The positive electrode 10 includes a positive electrode mixture layer 1a and a positive electrode current collector 1b. The positive electrode mixture layer 1a is formed on a surface of the positive electrode current collector 1b.

The negative electrode 20 includes a negative electrode mixture layer 2a and a negative electrode current collector 2b. The negative electrode mixture layer 2a is formed on a surface of the negative electrode current collector 2b. The negative electrode mixture layer 2a contains the negative electrode active material (N) according to the present disclosure.

A positive electrode tab lead 1c is connected to the positive electrode current collector 1b, and a negative electrode tab lead 2c is connected to the negative electrode current collector 2b. The positive electrode tab lead 1c and the negative electrode tab lead 2c each extend out of the outer case 5.

Between the positive electrode tab lead 1c and the outer case 5 and between the negative electrode tab lead 2c and the outer case 5, an insulating tab film 6 is placed to provide electrical insulation therebetween.

### [Examples]

The present disclosure will be more specifically described below with reference to examples. However, the present disclosure is not limited to the following examples. First, a plurality of batteries, which were non-aqueous electrolyte secondary batteries, were produced by the following methods.

### <Battery A1>

### (1) Production of negative electrode

Lithium carbonate (Li₂CO₃) and silicon dioxide (SiO₂) were mixed in a molar ratio of Li₂CO₃:SiO₂ = 34:66, and the mixture was dissolved by heating at 1500°C for 5 hours in an inert gas atmosphere, to obtain a melt. The melt was passed between metal rolls, to form a solid in the form of flakes, and the solid was heat-treated at 750°C for 5 hours, to obtain a lithium silicate composite oxide present as a mixed phase of amorphous and crystalline. The obtained lithium silicate composite oxide was pulverized to have an average particle diameter of 10 µm.

Next, in an inert gas atmosphere, Si particles (3N, average particle diameter 10 µm) and the lithium silicate composite oxide were mixed in a mass ratio of Si particles:lithium silicate composite oxide = 58:42, and packed in the pot (made of SUS (stainless steel), volume: 500 mL) of a planetary ball mill (P-5, manufactured by Fritsch Co., Ltd.). Then, 24 SUS balls (diameter 20 mm) were placed in the pot, and with the lid closed, pulverization was performed at 200 rpm for 50 hours, to obtain powder. Thereafter, the obtained powder was taken out in an inert gas atmosphere, and heat-treated at 800°C for 4 hours in the inert gas atmosphere, to obtain a sintered body of a Si-containing lithium silicate composite oxide. That is, through the above processes, composite particles containing a lithium silicate phase and a silicon phase dispersed in the lithium silicate phase were produced.

Thereafter, the sintered body was pulverized, and passed through a 40-µm mesh. Then, the particles passed through the mesh were mixed with coal pitch (MCP250, manufactured by JFE Chemical Corporation) to obtain a mixture. Next, the mixture was heat-treated at 800°C for 5 hours in an inert gas atmosphere, to coat the particle surfaces with a conductive carbon, thus forming a conductive layer on the surfaces. The coated amount of the conductive layer was set to 5 mass% relative to the total mass of the Si-containing lithium silicate composite oxide particles and the conductive layer. Thereafter, using a sieve, active material particles having an average particle diameter of 5 µm and having a conductive layer were obtained. The active material particles and the conductive layer formed on the surfaces thereof may be hereinafter collectively referred to as "active material particles (a0)".

### [Analysis of active material particles]

Cross sections of the active material particles (a0) were observed with a TEM. The result found that the average particle diameter of the Si particles (Si phase) was less than 50 nm. Particle cross sections of the active material particles (a0) were observed with a SEM. The result confirmed that many Si particles (Si phase) were dispersed substantially uniformly in the silicate phase.

In the XRD pattern of the active material particles (a0), peaks derived from Si and Li₂Si₂O₅ were confirmed. No peaks derived from SiO₂ were observed at or around 2θ = 25°. The result of Si-NMR analysis on the active material particles (a0) found that the content of SiO₂ was below the lower detection limit.

### [Coat treatment of negative electrode active material]

To 3 mL of pure water, 20.3 mg (0.67 mass%) of 1,2-bis(trimethoxysilyl)ethane (commercial product, hereinafter may be referred to as "P1") represented by the following formula (1-1) was added, and mixed, to prepare an aqueous solution of P1. The active material particles (a0) were mixed in an amount of 5 g with the aqueous solution of P1, to prepare a paste. In the paste, the molar amount of P1 per unit mass of the active material particles (a0) was 15 µmol/g, and the molar amount of the Si element contained in P1, per unit mass of the active material particles (a0), was 30 µmol/g. Next, the paste was vacuum-dried at 100°C for 24 hours. Thus, P1 was reacted so as to form a siloxane bond, to obtain a powdered negative electrode active material (a1-1).

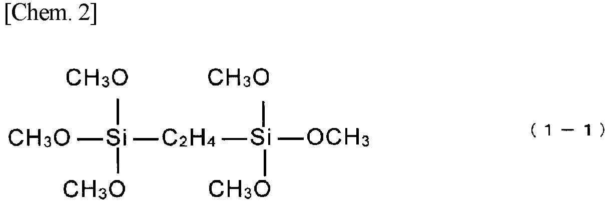

Across section of the negative electrode active material (a1-1) was observed with a TEM-EDX instrument (JEM-F200, manufactured by JEOL Ltd.). The result confirmed that a surface layer was formed on the Si-containing lithium silicate composite oxide particles. The result also confirmed that a conductive layer (conductive carbon layer) and a substance derived from P1 (including a reaction product of P1) infiltrated into the conductive layer were present in the surface layer.

### [Production of negative electrode]

An active material mixture containing the negative electrode active material (a1-1) and graphite in a mass ratio of negative electrode active material (a1-1):graphite = 5:95 was mixed with a sodium salt of carboxymethyl cellulose (CMC-Na), and styrene-butadiene rubber (SBR) in a mass ratio of active material mixture: CMC-Na:SBR = 97.5:1.0:1.5, and water was added thereto, to obtain a mixture. The mixture was stirred in a mixer (T.K. HIVIS MIX, manufactured by PRIMIX Corporation), to prepare a negative electrode slurry. Next, the negative electrode slurry was applied to one surface of copper foil (negative electrode current collector) to form a coating film. Next, the coating film was dried, and then rolled, to obtain a laminate (copper foil with the negative electrode mixture layer formed on one surface thereof). This laminate was cut out into a shape measuring 21 mm × 21 mm and including a negative electrode region and a tab portion, to obtain a negative electrode.

### (2) Production of positive electrode

Lithium cobaltate, acetylene black (HS100, manufactured by Denki Kagaku Kogyo Co., Ltd.), and polyvinylidene fluoride (PVdF) were mixed in a mass ratio of lithium cobaltate:acetylene black:PVdF = 98.7:0.7:0.6. To the mixture, N-methyl-2-pyrrolidone (NMP) was added as a dispersion medium, which was then stirred in a mixer (T.K. HIVIS MIX, manufactured by PRIMIX Corporation), to prepare a positive electrode slurry. Next, the positive electrode slurry was applied to one surface of aluminum foil (positive electrode current collector) to form a coating film. Next, the coating film was dried, and then rolled to obtain a laminate (aluminum foil with the positive electrode mixture layer formed on one surface thereof). This laminate was cut out into a shape measuring 20 mm × 20 mm and including a positive electrode region and a tab portion, to obtain a positive electrode.

### (3) Preparation of non-aqueous electrolytic solution

In a mixed solvent obtained by mixing ethylene carbonate (EC), ethyl methyl carbonate (EMC), and dimethyl carbonate (DMC) in a volume ratio of EC:EMC:DMC = 4:1:15, lithium hexafluorophosphate (LiPF₆) was added at a concentration of 1.3 mol/L, to prepare a non-aqueous electrolytic solution.

### (4) Production of battery A1 for evaluation

Using the above-described negative electrode and positive electrode, a battery A1 (design capacity: 19 mAh) was produced. First, the negative electrode and the positive electrode were stacked, with two polyethylene separators (thickness 15 µm) having an aramid coating interposed therebetween, to obtain an electrode plate group. At this time, the negative electrode and the positive electrode were stacked such that the negative electrode mixture layer and the positive electrode mixture layer were opposed to each other. Next, an Al laminate film (thickness 100 µm) cut out into a rectangular shape was folded in half, and then heat-sealed at 230°C at an end portion thereof on the longer side, to form a tube. Thereafter, the produced electrode plate group was placed into the tube from one shorter side thereof, and part of the Al laminate film was heat-sealed. Next, 0.3 cm³ of the non-aqueous electrolytic solution was injected into the tube from the shorter side thereof that had not been heat-sealed. Next, the tube was stood still for 3 minutes under reduced pressure of 0.08 MPa, and subsequently the pressure was returned to atmospheric pressure. This operation was performed twice, to impregnate the negative electrode mixture layer with the non-aqueous electrolytic solution. Lastly, the Al laminate film was heat-sealed at an end portion thereof on the side from which the non-aqueous electrolytic solution had been injected, to obtain a battery A1 for evaluation. Note that the production of the battery A1 for evaluation was performed under dry-air atmosphere with a dew point of -60°C or less.

### <Battery A2>

A negative electrode active material (a1-2) was produced in the same manner using the same conditions and method as those used for the production of the negative electrode active material (a1-1) of the battery A1, except that 1,6-bis(trimethoxysilyl)hexane (commercial product, hereinafter may be referred to as "P2") represented by the following formula (1-2) was used in place of the compound represented by the formula (1-1). In the paste containing the active material particles (a0) and an aqueous solution of P2, the molar amount of P2 per unit mass of the active material particles (a0) was set to 15 µmol/g, and the molar amount of the Si element contained in P2, per unit mass of the active material particles (a0), was set to 30 µmol/g.

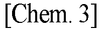

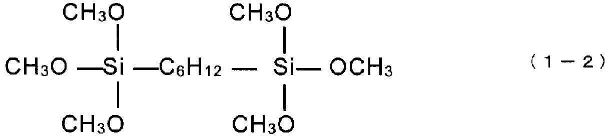

Furthermore, a battery A2 was produced using the same conditions and method as those used for the production of the battery A1, except that the negative electrode active material (a1-2) was used in place of the negative electrode active material (a1-1).

### <Battery C1>

A negative electrode active material (c1) was produced using the same conditions and method as those used for the production of the negative electrode active material (a1-1) of the battery A1, except that vinyltris(2-methoxyethoxy)silane (commercial product, hereinafter may be referred to as "P3") represented by the following formula was used in place of the compound represented by the formula (1-1). In the paste containing the active material particles (a0) and an aqueous solution of P3, the molar amount of P3 per unit mass of the active material particles (a0) was set to 15 µmol/g, and the molar amount of the Si element contained in P3, per unit mass of the active material particles (a0), was set to 15 µmol/g.

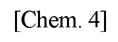

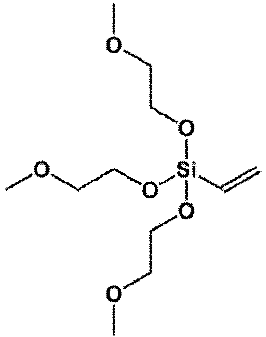

Furthermore, a battery C1 was produced using the same conditions and method as those used for the production of the battery A1, except that the negative electrode active material (c1) was used in place of the negative electrode active material (a1-1).

### <Battery C2>

A negative electrode active material (c2) was produced using the same conditions and method as those used for the negative electrode active material (c1) of the battery C1, except that the concentration of the solution of vinyltris(2-methoxyethoxy)silane was doubled. In the paste containing the active material particles (a0) and an aqueous solution of P3, the molar amount of P3 per unit mass of the active material particles (a0) was set to 30 µmol/g, and the molar amount of the Si element contained in P3, per unit mass of the active material particles (a0), was set to 30 µmol/g. Furthermore, a battery C2 was produced using the same conditions and method as those used for the production of the battery A1, except that the negative electrode active material (c2) was used in place of the negative electrode active material (a1-1).

As described above, in the pastes used for the production of the negative electrode active materials of the batteries A1, A2, and C1, the molar amounts of the alkoxysilane-based compounds per unit mass of the active material particles (a0) were all set to 15 µmol/g. In the pastes used for the production of the negative electrode active materials of the batteries A1, A2, and C2, the molar amounts of the Si elements contained in the alkoxysilane-based compounds, per unit mass of the active material particles (a0), were all set to 30 µmol/g.

### <Battery C3>

A negative electrode active material (c3) was produced using the same conditions and method as those used for the production of the negative electrode active material (a1-1) of the battery A1, except that the treatment with the P1 solution was not performed. Furthermore, a battery C3 was produced using the same conditions and method as those used for the production of the battery A1, except that the negative electrode active material (c3) was used in place of the negative electrode active material (a1-1).

### (Evaluation of charge-discharge cycle characteristics)

For the above-described batteries, a total of 30 charge-discharge cycles were performed at a temperature of 25°C by performing one charge-discharge cycle under each of the following [Charge-discharge condition 1], [Charge-discharge condition 2], [Charge-discharge condition 3], and [Charge-discharge conditions 4] in this order, and subsequently performing 26 charge-discharge cycles under [Charge-discharge condition 2].

### [Charge-discharge condition 1]

A constant-current charging was performed at a constant current of 0.5C (1C is a current value at which the design capacity can be discharged in one hour) until the battery voltage reached 4.2 V, and a constant-voltage charging was performed at a constant voltage of 4.2 V until the current value reached 0.02C. After a rest for 20 minutes, a constant-current discharging was performed at a constant current of 0.5C until the battery voltage reached 2.5 V, followed by a rest for 20 minutes. Subsequently, a constant-current discharging was performed at a constant current of 0.2C until the battery voltage reached 2.5 V, followed by a rest for 20 minutes.

### [Charge-discharge condition 2]

A constant-current charging was performed at a constant current of 0.5C until the battery voltage reached 4.2 V, and a constant-voltage charging was performed at a constant voltage of 4.2 V until the current value reached 0.05C. After a rest for 20 minutes, a constant-current discharging was performed at a constant current of 0.7C until the battery voltage reached 2.5 V, followed by a rest for 20 minutes.

### [Charge-discharge condition 3]

A constant-current charging was performed at a constant current of 0.3C until the battery voltage reached 4.2 V, and a constant-voltage charging was performed at a constant voltage of 4.2 V until the current value reached 0.02C. After a rest for 20 minutes, a constant-current discharging was performed at a constant current of 0.05C until the battery voltage reached 2.5 V, followed by a rest for 20 minutes.

### [Charge-discharge condition 4]

A constant-current charging was performed at a constant current of 0.05C until the battery voltage reached 4.2 V, and a constant-voltage charging was performed at a constant voltage of 4.2 V until the current value reached 0.02C. After a rest for 20 minutes, a constant-current discharging was performed at a constant current of 0.5C until the battery voltage reached 2.5 V, followed by a rest for 20 minutes. Subsequently, a constant-current discharging was performed at a constant current of 0.2C until the battery voltage reached 2.5 V, followed by a rest for 20 minutes.

### [Capacity retention rate after 30 cycles]

The discharge capacity at the 5th cycle and the discharge capacity at the 30th cycle under the above-described charge-discharge conditions were measured, and a capacity retention rate after 30 cycles was determined from the following equation. The results are shown in Table 1. Capacity retention rate after 30 cycles (%) = (Discharge capacity at 30th cycle/Discharge capacity at 5th cycle) × 100

**[Table 1]**

| Battery | Compound used for surface layer | Capacity retention rate (%) |
|---|---|---|
| A1 | 1,2-bis(trimethoxysilyl)ethane | 98.3 |
| A2 | 1,6-bis(trimethoxysilyl)hexane | 97.6 |
| C1 | vinyltris(2-methoxyethoxy)silane | 97.1 |
| C2 | vinyltris(2-methoxyethoxy)silane | 96.6 |
| C3 | none | 96.1 |

The batteries C1 to C3 are batteries of comparative examples, and the batteries A1 and A2 are batteries according to the present disclosure. The capacity retention rates of the batteries A1 and A2 were higher than the capacity retention rate of the battery C3. This is presumably because the surfaces of the active material particles were protected by the presence of the compound (1). The capacity retention rates of the batteries A1 and A2 were higher than the capacity retention rates of the batteries C1 and C2. This is presumably because binding the two Si's forming the siloxane bond via R1 resulted in the formation of a reaction product containing R1, thus enhancing the effect of protecting the surfaces of the active material particles. Although the reason for the improvement in the protection effect is not clear, it seems that the enhanced flexibility of the reaction product due to R1 contributes to the improvement.

### [Industrial Applicability]

The present disclosure is applicable to a negative electrode active material for a non-aqueous electrolyte secondary battery, and a non-aqueous electrolyte secondary battery including the negative electrode active material.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1a: positive electrode mixture layer, 1b: positive electrode current collector, 1c: positive electrode tab lead, 2a: negative electrode mixture layer, 2b: negative electrode current collector, 2c: negative electrode tab lead, 4: electrode plate group, 5: outer case, 6: insulating tab film, 10: positive electrode, 20: negative electrode, 30: separator, 100: non-aqueous electrolyte secondary battery

## Claims

1. A negative electrode active material for a non-aqueous electrolyte secondary battery, comprising:
active material particles containing silicon; and
a surface layer formed on surfaces of the active material particles, wherein
the surface layer contains a reaction product of a compound reacted so as to form a siloxane bond,
the compound includes a structure represented by Si-R1-Si,
the R1 is a hydrocarbon group having 1 to 50 carbon atoms,
one of the two Si's is bound with at least one atomic group selected from the group consisting of an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y1 is an integer of 1 or more and 3 or less, a chloro group, and a hydroxyl group, and
the other one of the two Si's is bound with at least one atomic group selected from the group consisting of an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, and a hydroxyl group.

2. The negative electrode active material according to claim 1, wherein the compound is a compound represented by the following formula (1): 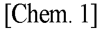 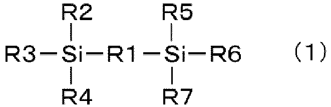 wherein in the formula (1), at least one selected from the group consisting of R2, R3, and R4 is each independently an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y 1 is an integer of 1 or more and 3 or less, a chloro group, or a hydroxyl group; at least one selected from the group consisting of R5, R6, and R7 is each independently an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, or a hydroxyl group; the rest of R2 to R7 are each independently a hydrocarbon group having 1 to 6 carbon atoms, a hydrogen atom, or a group represented by Cₓ₃H_{2x3+y3+1}N_{y3}O_{z3}S_{w3} where x3 is an integer of 1 or more and 6 or less, and y3 is an integer of 0 or more and 3 or less, z3 is an integer of 0 or more and 3 or less, w3 is an integer of 0 or more and 3 or less, and 1 ≤ y3 + z3 + w3; and R2 to R7 may be the same or different.

3. The negative electrode active material according to claim 2, wherein in the formula (1), R2 to R7 are a methoxy group or an ethoxy group.

4. The negative electrode active material according to any one of claims 1 to 3, wherein the two Si's are joined by a carbon chain having 1 to 20 carbon atoms.

5. The negative electrode active material according to claim 4, wherein the R1 is a linear alkylene group.

6. The negative electrode active material according to any one of claims 1 to 5, wherein the surface layer contains a conductive carbon.

7. The negative electrode active material according to any one of claims 1 to 6, wherein the active material particles are composite particles containing a lithium silicate phase represented by LiₓSiO_{y} where 0 < x ≤ 4, 0 < y ≤ 4, and a silicon phase dispersed in the lithium silicate phase.

8. The negative electrode active material according to claim 7, wherein the silicon phase has a crystallite size in the range of 1 nm to 1000 nm.

9. The negative electrode active material according to any one of claims 1 to 6, wherein the active material particles contain a carbon phase, and a silicon phase dispersed in the carbon phase.

10. Anon-aqueous electrolyte secondary battery, comprising:
a positive electrode; a negative electrode; and a non-aqueous electrolyte, wherein
the negative electrode includes the negative electrode active material according to any one of claims 1 to 9.

11. A production method of a negative electrode active material for a non-aqueous electrolyte secondary battery, the production method comprising:
a first step of bringing a compound or a liquid in which the compound is dissolved, into contact with active material particles containing silicon; and
a second step of reacting the compound so as to form a siloxane bond, while the compound or the liquid is in contact with the active material particles, wherein
the compound includes a structure represented by Si-R1-Si,
the R1 is a hydrocarbon group having 1 to 50 carbon atoms,
one of the two Si's is bound with at least one atomic group selected from the group consisting of an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y1 is an integer of 1 or more and 3 or less, a chloro group, and a hydroxyl group, and
the other one of the two Si's is bound with at least one atomic group selected from the group consisting of an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, and a hydroxyl group.

12. The production method according to claim 11, wherein the compound is a compound represented by the following formula (1): 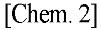 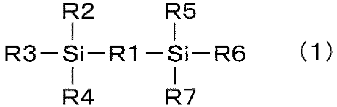 wherein in the formula (1), at least one selected from the group consisting of R2, R3, and R4 is each independently an alkoxy group having 1 to 6 carbon atoms, a group including an oxyalkylene group and represented by -O-(Cₓ₁H₂ₓ₁₊₁O_{y1}) where x1 is an integer of 2 or more and 6 or less, and y1 is an integer of 1 or more and 3 or less, a chloro group, or a hydroxyl group; at least one selected from the group consisting of R5, R6, and R7 is each independently an alkoxy group having 1 to 6 carbon atoms, a group including an oxyalkylene group and represented by -O-(Cₓ₂H₂ₓ₂₊₁O_{y2}) where x2 is an integer of 2 or more and 6 or less, and y2 is an integer of 1 or more and 3 or less, a chloro group, or a hydroxyl group; the rest of R2 to R7 are each independently a hydrocarbon group having 1 to 6 carbon atoms, a hydrogen atom, or a group represented by Cₓ₃H_{2x3+y3+1}N_{y3}O_{z3}S_{w3} where x3 is an integer of 1 or more and 6 or less, and y3 is an integer of 0 or more and 3 or less, z3 is an integer of 0 or more and 3 or less, w3 is an integer of 0 or more and 3 or less, and 1 ≤ y3 + z3 + w3; and R2 to R7 may be the same or different.
